# EUROPÄISCHE PATENTSCHRIFT

(11) **EP 3 347 122 B1**
(45) Veröffentlichungstag und Bekanntmachung des Hinweises auf die Patenterteilung: **19.02.2020**
(21) Anmeldenummer: 16759965.3
(22) Anmeldetag: 27.07.2016
(51) Int. Cl.: B01F 5/06, B01F 3/04

(54) **SCHAUMERZEUGER**
FOAM FORMATION DEVICE
DISPOSITIF DE GÉNÉRATION DE MOUSSE

(30) Priorität: 09.09.2015 DE 102015011501
(43) Veröffentlichungstag der Anmeldung: 18.07.2018
(73) Patentinhaber: WashTec Holding GmbH, 86153 Augsburg (DE)
(72) Erfinder: SATTLER, Andreas, 81543 München (DE); MAYER, Stefan, 86356 Neusäß (DE)
(74) Vertreter: Reitstötter Kinzebach
(86) Internationale Anmeldenummer: PCT/DE2016/100344
(87) Internationale Veröffentlichungsnummer: WO 2017/041781

(56) Entgegenhaltungen:
- EP-A2- 0 167 947
- DE-U1- 8 034 885
- FR-A- 798 968
- GB-A- 2 247 411
- JP-A- H0 221 933
- US-A1- 2003 217 421

## Beschreibung

Die vorliegende Erfindung betrifft Verfahren zum Erzeugen von Schaum für eine Kraftfahrzeugwaschanlage nach dem Oberbegriff des Anspruchs 1. Ferner betrifft die Erfindung eine Kraftfahrzeugwaschanlage nach dem Oberbegriff des Anspruchs 9, umfassend einen Schaumerzeuger mit einer Schaumerzeugungskammer. Ein Schaumerzeuger ist eine Vorrichtung zur Erzeugung von Schaum aus einem Gas, insbesondere Luft, Wasser und einem Hilfsstoff, (Tensid) welche der Vorrichtung zugeführt werden.

Sogenannte Fluidisierungs- oder Fließbetteinrichtungen, in denen eine Schüttung aus Feststoffteilchen durch Hindurchpumpen eines Fluids in einen flüssigkeitsähnlichen Zustand versetzt werden, in denen die vom strömenden Fluid in der Schwebe gehaltenen Teilchen in der Lage sind, sich wie die Moleküle einer Flüssigkeit oder eines Gases regellos gegeneinander zu bewegen, werden in vielen Bereichen der Technik eingesetzt.

In DE 80 34 885 Ul ist als Stand der Technik ein Schaumerzeuger beschrieben, bei dem eine Kammer von einer Tensidlösung durchströmt wird und dadurch Kunststoffkugeln in der Kammer wie in einem Fließbett in Bewegung versetzt werden. Die Bewegung der Kugeln führt zur Bildung von Schaum in der Lösung, der zusammen mit der Lösung unter Druck aus der Kammer ausgestoßen wird. Als Nachteil dieses Schaumerzeugers wird unter anderem die Abnutzung der Kugeln im Betrieb beanstandet, und als Abhilfe wird ein Schaumerzeuger vorgeschlagen, die Kugeln durch in der Kammer ortsfest montierte Siebe zu ersetzen, durch die die Tensidlösung hindurchgepresst und dabei verschäumt wird.

Ein erster Nachteil dieser Lösung ist wiederum, dass zur Erzeugung von kleinblasigem Schaum eine große Zahl von Sieben benötigt wird und der Zusammenbau des Schaumerzeugers mit steigender Zahl der Siebe immer aufwendiger wird.

Ein zweiter Nachteil liegt in der geringen Toleranz gegen Verunreinigungen in der Tensidlösung. Autowaschanlagen arbeiten im Allgemeinen mit einem geschlossenen Wasserkreislauf, in dem das Wasser nach einem Waschvorgang aufbereitet und wiederverwendet wird. Wenn das Wasser nach der Aufbereitung noch Reste von Schwebstoffen enthält, beeinträchtigt dies nicht das Waschergebnis. Falls sich diese Schwebstoffe jedoch an den Sieben des in DE 80 34 885 Ul vorgeschlagenen Schaumerzeugers verfangen, führen sie zur Verstopfung- Dann muss der Schaumerzeuger zerlegt und gereinigt werden, was für den Betreiber der Waschanlage zu erhöhtem Wartungsaufwand und eventuell zu einer für die Kunden eventuell störenden Betriebsunterbrechung führt.

Die EP 0 167 947 A2 beschreibt einen Schaumgenerator für eine Autowaschstraße mit Schaumerzeugungskammern, die mit Füllmaterial gefüllt sind. Das Füllmaterial besteht aus einem losen schlauchförmigen Geflecht aus dünnen, monofilen bandförmigen Kunststoffdrähten oder - streifen, das torrusförmig zusammengezogen ist, so dass es einen scheibenförmigen Körper bildet.

Eine Aufgabe der Erfindung ist, ein Verfahren zum Erzeugen von Schaum für eine Kraftfahrzeugwaschanlage und eine Kraftfahrzeugwaschanlage mit einem Schaumerzeuger zu schaffen, die bei einfachem Aufbau und geringem Wartungsbedarf Schaum von guter Homogenität liefern.

Die Aufgabe wird gelöst durch ein Verfahren mit den Merkmalen des Anspruchs 1 und eine Kraftfahrzeugwaschanlage mit den Merkmalen des Anspruchs 9.

Solange die Partikel einer Schüttung in Ruhe sind und sich gegenseitig berühren, ist ihr Platzbedarf gering. Wenn ein Fluid von unten durch eine Schüttung hindurchgepumpt wird und dabei Partikel anhebt, dehnt sich die Schüttung aus. Der Volumenzuwachs, bei dem Fluidisierung eintritt, ist von verschiedenen Parametern, insbesondere von der Form der Partikel und dem Grad ihrer Ordnung abhängig. Bei einer zufälligen Schüttung liegt er meist bei ca. 5%. Eine gitterartig geordnete Anordnung von Partikeln kann wesentlich dichter sein als eine zufällige Schüttung; dementsprechend ist hier der Volumenzuwachs bis zur Fluidisierung größer.

Indem erfindungsgemäß die Schüttung die Schaumerzeugungskammer so weit ausfüllt, dass die für die Fluidisierung erforderliche Ausdehnung nicht mehr möglich ist, wird die Fluidisierung unterdrückt. Weiträumige Bewegungen der Schüttungspartikel, die zu zahlreichen Zusammenstößen und in der Folge zu Verschleiß der Partikel führen, werden so verhindert.

Wenn die Strömung der Tensidlösung - die sich spätestens in der Schaumerzeugungskammer aus dem eingespeisten Wasser und Tensid bildet - so stark ist, dass sie eine in ihrem Volumenzuwachs nicht eingeschränkte Schüttung fluidisieren würde, wird die Schüttung in der Schaumerzeugungskammer stattdessen in Richtung des Auslasses verschoben und dort von der Strömung festgedrückt, so dass Bewegungen der Schüttungspartikel gegeneinander unterdrückt werden.

Die Schaumerzeugung basiert nicht auf Bewegung der Partikel; im Gegenteil wird die Tatsache ausgenutzt, dass der Strom des durch die Schüttung hindurchströmenden Gases sich auf eine Vielzahl von Foren zwischen den in Kontakt miteinander gehaltenen Partikeln der Schüttung verteilen muss.

Da Schaum nur dort entsteht, wo in der Schüttung Gas und Flüssigkeit zusammentreffen, wäre es für eine effiziente Schaumerzeugung an sich sinnvoll, die Schaumerzeugungskammer komplett mit der Schüttung auszufüllen. Dann wären die Partikel der Schüttung vollends unbeweglich, und auch der Verschleiß wäre auf ein Minimum reduziert. Gemäß der Erfindung ist jedoch vorgesehen, dass ein Anteil der Schaumerzeugungskammer von der Schüttung frei bleibt, dessen Größe wenigstens der Hälfte des zur Fluidisierung notwendigen Volumenzuwachses entspricht. Der Grund für diese Maßnahme ist, dass die Bewegung der Schüttungspartikel, die dadurch jeweils beim Ein- und Ausschalten der Strömung ermöglicht wird, dafür sorgt, dass mit dem Wasser zugeführte und an den Partikeln der Schüttung hängengebliebene Schmutzteilchen losgeschüttelt werden, im Laufe der Zeit durch die Schüttung hindurchwandern und mit dem Schaum aus der Schaumerzeugungskammer ausgetragen werden. Ein Verstopfen der Schüttung durch von aufbereitetem Wasser mitgeführte Reststoffe ist daher ausgeschlossen.

Die Blasen des in dem Schaumerzeuger entstehenden Schaums sind um so feiner, je enger die Poren der Schüttung sind, deswegen ist eine Partikelgröße der Schüttung von maximal 5 mm bevorzugt.

Andererseits fuhren zu enge Poren auch zu einem hohen Druckabfall in der Schüttung, die den Durchsatz an Luft und Tensidlösung durch die Schüttung und damit die Produktivität des Schaumerzeugers beeinträchtigt. Deshalb sollte die Partikelgröße 1 mm nicht unterschreiten.

Wenn in der Schüttung große Partikel aufeinandertreffen, haben auch die von ihnen begrenzten Poren einen großen Querschnitt und erlauben hohe Strömungsgeschwindigkeiten. Deswegen ziehen in einer Schüttung mit Partikeln unterschiedlicher Größen die großen Poren einen überproportionalen Anteil des Massenstroms auf sich, während in den kleinen Poren nur ein schwacher, wenig turbulenter Massenstrom zustande kommt. Deshalb ist die Homogenität des Schaums umso besser und das für eine gegebene Schaumqualität benötigte Volumen der Schüttung umso kleiner, je einheitlicher die Größe der Partikel ist. Deswegen sollte die Schüttung zu wenigstens 90 Gew.% aus Partikeln bestehen, deren Größen sich maximal um einen Faktor 2, besser noch maximal um einen Faktor 1,5, unterscheiden. Noch homogenere Schüttungen sind technisch problemlos möglich, meist aber wegen ihres vergleichsweise hohen Preises unattraktiv.

Die Qualität des Schaums hängt auch von der Höhe der Schüttung ab, die die Luft durchlaufen muss. Um einen feinblasigen Schaum von guter Homogenität zu erhalten, sollte die Höhe wenigstens dem 20 -fachen der mittleren Partikelgröße entsprechen. Wenn allerdings die Höhe der Schüttung das Hundertfache der mittleren Partikelgröße übersteigt, führt dies allenfalls noch zu einer Steigerung des Druckabfalls, aber nicht mehr zu einer weiteren Qualitätsverbesserung des Schaums.

Als Material für die Schüttung kommt jeder gegen die verwendete Tensidlösung stabile Werkstoff in Betracht. Eine besonders preiswerte Möglichkeit ist feiner Kies oder Splitt, ein Nachteil ist hier jedoch, dass die relativ rauhen Oberflächen dieser Materialien stark dazu neigen, die im wiederaufbereiteten Wasser mitgeführten Reststoffe anzulagern und sie auch bei der mit Bin- und Ausschalten der Fluidströmung verbundenen Erschütterung nur zögerlich wieder freisetzen. Bevorzugt sind Schüttungen aus Materialien wie Kunststoff, Glas oder Metall, die mit geringem Aufwand mit glatteren Oberflächen produziert werden können. Kupfer oder Kupferlegierungen wie etwa Bronze können wegen ihrer das Keimwachstum hemmenden Eigenschaften insbesondere dann von Interesse sein, wenn das Wasser in einer Waschanlage, die mit dem Schaumerzeuger ausgestattet ist, einem geschlossenen Kreislauf zirkuliert.

Eine bei guter Einheitlichkeit der Partikelgröße kostengünstige Schüttung kann aus Abschnitten eines Extrusionsprofils bestehen. Wenn das Extrusionsprofil ein Hohlprofil ist, ist ferner ein hoher Porenanteil der Schüttung erreichbar.

Einer bevorzugten Alternative zufolge sind die Schüttungspartikel Kugeln. Die Poren einer Kugelschüttung haben jeweils mehrere von einem zentralen Bereich ausgehende, sich zu einem Kontaktpunkt zwischen zwei Kugeln hin spitzwinklig verengende Fortsätze, in denen die Strömungsgeschwindigkeit wesentlich niedriger ist als in dem zentralen Bereich und die unter ständigem Richtungswechsel ineinander übergehen. Es genügt daher bereits ein geringer Massendurchsatz an Luft und Tensidlösung, um in den Poren eine stark turbulente, effizient Schaum bildende Strömung zu erzeugen.

Bei dem erfindungsgemäßen Verfahren wird ferner durch Hindurchpumpen eines Stroms von Wasser, Tensid und Gas durch die Schüttung in der Schaumerzeugungskammer Schaum erzeugt. Gemäß einer Weiterbildung ist die Stärke des Stroms bemessen, um die Schüttung aus einer Ruhestellung an einer Einlassseite der Schaumerzeugungskammer in eine Arbeitsstellung an einer Auslassseite der Schaumerzeugungskammer zu verlagern und dort zu festzuhalten.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen schematischen Schnitt durch den Schaumerzeuger der erfindungsgemäßen Kraftfahrzeugwaschanlage in einem Ruhezustand;
- Fig. 2: einen zu Fig. 1 analogen Schnitt durch den in Betrieb befindlichen Schaumerzeuger; und
- Fig. 3: einen Schnitt durch einen zweiten Schaumerzeuger der erfindungsgemäßen Kraftfahrzeugwaschanlage.

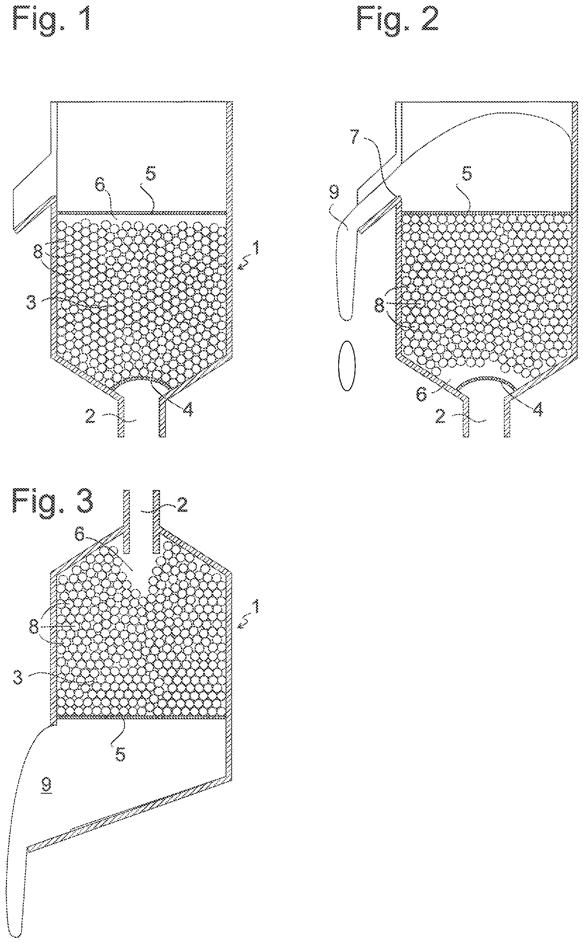

Fig. 1 zeigt den Schaumerzeuger der erfindungsgemäßen Kraftfahrzeugwaschanlage im Schnitt entlang einer vertikalen Schnittebene. Eine Schaumerzeugungskammer 1 ist hier mit einem gemeinsamen Einläse 2 für Wasser, Tensid und Druckluft an ihrem unteren Ende dargestellt. Alternativ könnten zwei oder drei Einlässe vorgesehen sein, um Luft und Flüssigkeit oder alle drei Komponenten erst in der Schaumerzeugungskammer 1 zusammenzuführen.

Eine Schüttung 3 aus sphärischen Glasperlen 8 füllt die Schaumerzeugungskammer 1 zum größten Teil aus. Ein Sieb 4 am Boden der Schaumerzeugungskammer l verhindert ein Vordringen der Schüttung 3 in den Einlass 2. Ein weiteres Sieb 5 schließt die Schaumerzeugungskammer 1 nach oben ab. Ein Leerraum 6 zwischen der Oberfläche der Schüttung 3 und dem Sieb 5 nimmt wenige Prozent des Volumens der Schaumerzeugungskammer l ein.

Das Sieb 5 kann entfernt werden, um die Glasperlen 8 von oben in die Schaumerzeugungskammer 1 zu schütten. Die dabei entstehende Anordnung der Glasperlen 8 ist lockerer als deren dichtestmögliche, regelmäßige Packung und kann durch Rütteln noch geringfügig verdichtet werden; in der Praxis kann die Kammer 1 bis zur Einbauhöhe des Siebs 5 aufgefüllt werden, um durch anschließende Setzbewegungen der Perlen 8 den Leerraum 6 in geeigneter Größe zu bilden.

Wenn nach Einfüllen der Perlen 8 das Sieb 5 wieder befestigt ist, kann der Schaumerzeuger in Betrieb genommen werden, indem Wasser, Tensid und Druckluft über den Einläse 2 eingespeist werden. Mit Hilfe von dem Einläse 2 vorgelagerten Dosierventilen kann das Verhältnis zwischen Luft, Wasser und Tensid eingestellt und so die Konsistenz des fertigen Schaums bestimmt werden.

Der Gesamtmassenfluss aller drei Komponenten ist stark genug, um die Perlen 8 vom Boden der Schaumerzeugungskammer 1 abzuheben. Da die Schüttung 3 jedoch, bevor sie fluidisieren kann, von unten an das auslassseitige Sieb 5 stößt, kommt es lediglich zu einer einzigen ruckartigen Bewegung, mit der sich die gesamte Schüttung 3 vom Boden löst, um anschließend wie in Fig. 2 gezeigt an der Unterseite des Siebs 5 anzuliegen. Da sich dabei die Oberfläche der Schüttung 3 an das Sieb 5 anpassen muss, verschieben sich kurzzeitig die Perlen 8 gegeneinander; sobald die Schüttung sich an das Sieb 5 angeschmiegt hat, endet die Relativbewegung der Perlen 8. Reststoffe, die sich zuvor an den Perlen 8 abgelagert haben, werden durch diese Bewegung losgeschüttelt oder gar durch den Kontakt der Perlen 8 untereinander losgescheuert und dann von der Strömung von Wasser, Luft und Tensid so weit mitgespült, bis sie sich entweder an einer weiter stromab gelegenen Perle 8 wieder anlagern oder mit dem entstehenden Schaum 9 das Sieb 5 passieren und aus dem Schaumerzeuger über eine Überlaufkante 7 ausgetragen werden.

Nach Ausschalten der Zufuhr von Luft, Wasser und Tensid fällt die Schüttung 3 wieder in die Ruhelage der Fig. 1 zurück.

Fig. 3 zeigt eine Abwandlung des Schaumerzeugers, bei der sich ein Einlass 2 für Luft, Wasser und Tensid am oberen Ende der Schaumerzeugungskammer 1 befindet, so dass die Schüttung 3 von oben nach unten, zum hier den Boden der Schaumerzeugungskammer 1 bildenden auslassseitigen Sieb 5, durchströmt wird und Schaum 9 durch das Sieb 5 nach unten austritt. Bin Leerraum 6 über der Schüttung 3 hat dieselbe Größe wie im Falle der Fig. 1 und 2.

Beim Schaumerzeuger der Fig. 3 ruht die Schüttung 3 sowohl im Betrieb als auch bei ausgeschalteter Strömung auf dem Sieb 5. Da der Strom des Wassers hier jedoch nicht durch ein einlassseitiges Sieb verteilt wird, sondern als Strahl auf die Schüttung 3 trifft, werden deren Perlen 8 jedes Mal beim Einschalten der Strömung aufgewirbelt, so dass Ablagerungen aufgewirbelt und weggespült werden. Sobald jedoch die Strömung stabil ist, ist durch das geringe Volumen des Leerraums 6 sichergestellt, dass diejenigen Perlen 8, die ihn begrenzen, von der Strömung fest gegen die dahinterliegenden Perlen 8 gedrückt und unbeweglich gehalten werden.

### Bezugszeichen

- 1: Schaumerzeugungskammer
- 2: Einlass
- 3: Schüttung
- 4: Sieb
- 5: Sieb
- 6: Leerraum
- 7: Überlaufkante
- 8: Glasperle
- 9: Schaum

## Patentansprüche

1. Verfahren zum Erzeugen von Schaum für eine Kraftfahrzeugwaschanlage, bei dem wenigstens einem Einlass (2) einer Schaumerzeugungskammer (1) Wasser, Tensid und Gas, insbesondere Druckluft, zugeführt wird und die Schaumerzeugungskammer (1) einen Auslass (7) für Schaum aufweist und eine für Fluide durchlässige Schüttung (3) aus losen Partikeln enthält, und durch Hindurchpumpen eines Stroms von Wasser, Tensid und Gas durch die Schüttung (3) in der Schaumerzeugungskammer (1) Schaum erzeugt wird, **dadurch gekennzeichnet, dass** die Schüttung (3) die Schaumerzeugungskammer (1) so weit ausfüllt, dass eine Fluidisierung der Schüttung (3) nicht möglich ist und ein Teil (6) der Schaumerzeugungskammer (1) von der Schüttung (3) frei bleibt, dessen Größe wenigstens der Hälfte des für die Fluidisierung der Schüttung (3) notwendigen Volumenzuwachses entspricht.

2. Verfahren nach Anspruch 1, **dadurch gekennzeichnet, dass** die Partikel der Schüttung (3) eine Größe zwischen 1 und 5 mm aufweisen.

3. Verfahren nach Anspruch 1 oder 2, **dadurch gekennzeichnet, dass** die Schüttung (3) zu wenigstens 90 Gew-% aus Partikeln besteht, deren Größen sich maximal um einen Faktor 2, besser noch maximal um einen Faktor 1,5, unterscheiden.

4. Verfahren nach einem der vorhergehenden Ansprüche, **dadurch gekennzeichnet, dass** die Höhe der Schüttung (3) wenigstens das 20-fache der mittleren Größe der Partikel beträgt.

5. Verfahren nach einem der vorhergehenden Ansprüche, **dadurch gekennzeichnet, dass** die Partikel aus Kunststoff, Metall, insbesondere Kupfer, oder einer Kupferlegierung, oder Glas bestehen.

6. Verfahren nach einem der Ansprüche 1 bis 5, **dadurch gekennzeichnet, dass** die Partikel Abschnitte eines Extrusionsprofils, insbesondere eines Hohlprofils, sind.

7. Verfahren nach einem der Ansprüche 1 bis 5, **dadurch gekennzeichnet, dass** die Partikel Kugeln sind.

8. Verfahren nach einem der vorhergehenden Ansprüche, bei dem die Stärke des Stroms bemessen ist, um die Schüttung (3) aus einer Ruhestellung an einer Einlassseite der Schaumerzeugungskammer (1) in eine Arbeitsstellung an einer Auslassseite der Schaumerzeugungskammer zu verlagern und dort zu festzuhalten.

9. Kraftfahrzeugwaschanlage, umfassend einen Schaumerzeuger mit einer Schaumerzeugungskammer (1), die wenigstens einen Einlass (2) für Wasser, Tensid und Gas, insbesondere Druckluft, und einen Auslass (7) für Schaum aufweist und eine für Fluide durchlässige Schüttung (3) aus losen Partikeln enthält, **dadurch gekennzeichnet, dass** die Schüttung (3) die Schaumerzeugungskammer (1) so weit ausfüllt, dass eine Fluidisierung der Schüttung (3) nicht möglich ist und ein Teil (6) der Schaumerzeugungskammer (1) von der Schüttung (3) frei bleibt, dessen Größe wenigstens der Hälfte des für die Fluidisierung der Schüttung (3) notwendigen Volumenzuwachses entspricht.

## Claims

1. A method for producing foam for a motor vehicle washing installation, wherein water, surfactant and gas, in particular compressed air, are supplied to at least one inlet (2) of a foam generating chamber (1), the foam generating chamber (1) having an outlet (7) for foam, and a fluid-permeable bed (3) of loose particles, and wherein by pumping a stream of water, surfactant and gas through the bed (3) in the foam generating chamber (1) foam is generated, **characterized in that** the bed (3) fills the foam generation chamber (1) sufficiently to prevent fluidization of the bed (3) and a portion (6) of the foam generation chamber (1) remains free of the bed (3), the size of which portion corresponds at least to half the increase in volume required for fluidization of the bed (3).

2. The method according to claim 1, **characterized in that** the size of the particles of the bed (3) measures between 1 and 5 mm.

3. The method according to claim 1 or 2, **characterized in that** at least 90 wt% of the bed (3) consists of particles, whose sizes differ at most by a factor of 2, more preferably at most by a factor of 1.5.

4. The method according to any one of the preceding claims, **characterized in that** the height of the bed (3) measures at least 20 times the mean size of the particles.

5. The method according to any one of the preceding claims, **characterized in that** the particles consist of plastic, metal, in particular copper or a copper alloy, or glass.

6. The method according to one of claims 1 to 5, **characterized in that** the particles are parts of an extruded section, in particular a hollow section.

7. The method according to one of claims 1 to 5, **characterized in that** the particles are beads.

8. The method according to any one of the preceding claims, in which the flow rate is regulated so that the bed (3) is moved from a rest position on the inlet side of the foam generation chamber (1) to an operating position on the outlet side of the foam generation chamber where it is held immobile.

9. A motor vehicle washing installation comprising a foam generator with a foam generating chamber (1) having at least one inlet (2) for water, surfactant and gas, in particular compressed air, and an outlet (7) for foam and a fluid-permeable bed (3) of loose particles, **characterized in that** the bed (3) fills the foam generation chamber (1) sufficiently to prevent fluidization of the bed (3) and a portion (6) of the foam generation chamber (1) remains free of the bed (3), the size of which portion corresponds at least to half the increase in volume required for fluidization of the bed (3).

## Revendications

1. Procédé de génération de mousse destinée à un système de lavage de véhicule automobile, procédé dans lequel de l'eau, un tensioactif et un gaz, en particulier de l'air comprimé, sont amenés à au moins une entrée (2) d'une chambre de génération de mousse (1) et la chambre de génération de mousse (1) comporte une sortie (7) destinée à la mousse et contient un lit (3) de particules libres qui est perméable à des fluides, et de la mousse est générée par pompage d'un flux d'eau, de tensioactif et de gaz à travers le lit (3) dans la chambre de génération de mousse (1), **caractérisé en ce que** le lit (3) remplit la chambre de génération de mousse (1) jusqu'à ce qu'une fluidisation du lit (3) ne soit pas possible et qu'une partie (6) de la chambre de génération de mousse (1) reste libre du lit (3), la dimension de cette partie correspondant au moins à la moitié de l'augmentation de volume nécessaire à la fluidisation du lit (3).

2. Procédé selon la revendication 1, **caractérisé en ce que** les particules du lit (3) ont une dimension comprise entre 1 et 5 mm.

3. Procédé selon la revendication 1 ou 2, **caractérisé en ce que** le lit (3) comprend au moins 90 % en poids de particules dont les dimensions diffèrent au maximum d'un facteur 2, mieux encore au maximum d'un facteur 1,5.

4. Procédé selon l'une des revendications précédentes, **caractérisé en ce que** la hauteur du lit (3) est égale à au moins 20 fois la dimension moyenne des particules.

5. Procédé selon l'une des revendications précédentes, **caractérisé en ce que** les particules sont en matière synthétique, en métal, notamment en cuivre, ou en un alliage de cuivre, ou en verre.

6. Procédé selon l'une des revendications 1 à 5, **caractérisé en ce que** les particules sont des portions d'un profilé d'extrusion, notamment d'un profilé creux.

7. Procédé selon l'une des revendications 1 à 5, **caractérisé en ce que** les particules sont des billes.

8. Procédé selon l'une des revendications précédentes, dans lequel la puissance de l'écoulement est dimensionnée de manière à déplacer et retenir le lit (3) d'une position de repos sur un côté entrée de la chambre de génération de mousse (1) dans une position de travail sur un côté sortie de la chambre de génération de mousse.

9. Système de lavage de véhicule automobile, comprenant un générateur de mousse pourvu d'une chambre de génération de mousse (1) qui comporte au moins une entrée (2) destinée à l'eau, un tensioactif et un gaz, en particulier de l'air comprimé, et une sortie (7) destinée à la mousse et qui contient un lit (3) de particules libres qui est perméable à des fluides, **caractérisé en ce que** le lit (3) remplit la chambre de génération de mousse (1) jusqu'à ce qu'une fluidisation du lit (3) ne soit pas possible et qu'une partie (6) de la chambre de génération de mousse (1) reste libre du lit (3), la dimension de la partie correspondant à au moins la moitié de l'augmentation de volume nécessaire à la fluidisation du lit (3).
